# EUROPEAN PATENT SPECIFICATION

(11) **EP 3 936 350 B1**
(45) Date of publication and mention of the grant of the patent: **10.05.2023**
(21) Application number: 21179776.6
(22) Date of filing: 16.06.2021
(51) Int. Cl.: B60C 11/03, B60C 11/00

(54) **TIRE, VEHICLE AND TIRE DESIGN METHOD**
REIFEN, FAHRZEUG UND REIFENENTWURFSVERFAHREN
PNEU, VÉHICULE ET PROCÉDÉ DE CONCEPTION DE PNEU

(30) Priority: 10.07.2020 JP 2020119267
(43) Date of publication of application: 12.01.2022
(73) Proprietor: Sumitomo Rubber Industries, Ltd., Kobe-shi, Hyogo-ken 651-0072 (JP)
(72) Inventor: ISHIBASHI, Takashi, Kobe-shi, 651-0072 (JP)
(74) Representative: Manitz Finsterwald Patent- und Rechtsanwaltspartnerschaft mbB

(56) References cited:
- WO-A1-2014/167990
- JP-A- H 111 103
- JP-A- S62 103 204
- US-A1- 2007 000 590
- US-A1- 2016 052 342
- US-A1- 2017 036 487
- US-A1- 2019 009 616

## Description

### Technical field

The present invention relates to a tire, more particularly to a tread pattern suitable for a tire mounted on a vehicle at a non-zero camber angle.

### Background art

Conventionally, in order to improve drainage performance of a tire, shapes of grooves disposed in the tread portion have been studied mainly (see, for example, Patent Document 1).
Patent Document 1: Japanese Patent Application Publication No. 2005-145307;
US 2007/0000590 A1 discloses a tire comprising the features according to the preamble of claim 1 and a method comprising the features according to the preamble of claim 10.
US 2019/0009616 A1 discloses a tire and a method comprising features according to a related technology.
US 2016/0052342 A1 also discloses a tire and a method comprising features according to a related technology.
JP H11 1103 A also discloses a tire and a method comprising features according to a related technology.
WO 2014/167990 A1 also discloses a tire and a method comprising features according to a related technology.

### Summary of the invention

### Problems to be solved by the invention

In a racing car and sports car running on a circuit at high speed, the tires are often mounted at negative camber angles larger than as usual
when the tire described in Patent Document 1 is mounted on a car at such a larger camber angle, the shape of the ground contacting patch (footprint) is altered, and there is a possibility that the intended drainage performance can not be obtained.

The present invention was made in view of the above circumstances, and a primary object of the present invention is to provide a tire which can exhibit excellent drainage performance when mounted on a vehicle at a non-zero camber angle.

According to the present invention, a tire comprises a tread portion provided with circumferentially continuously extending circumferential grooves including a first circumferential groove and a second circumferential groove, wherein
the first circumferential groove and the second circumferential groove are disposed on one side and the other side, respectively, of a cambered-tire tread center line,
the cambered-tire tread center line is defied by a line extending in the tire circumferential direction, along which a length in the tire circumferential direction of the ground contacting patch of the tire becomes maximum when the tire which is mounted on a normal rim and inflated to a normal pressure, is placed on a flat horizontal surface at a non-zero camber angle with respect to the flat horizontal surface, and loaded with a normal tire load in the vertical direction.

Moreover, the first circumferential groove and the second circumferential groove are arranged symmetrically with respect to the cambered-tire tread center line.

Alternatively or additionally, the tread portion comprises an inboard tread part and an outboard tread part to be positioned inside and outside, respectively, with respect to a vehicle when the tire is mounted on the vehicle, and in a meridian cross-sectional view of the tire, the profile of a ground contacting surface of the inboard tread part has a radius of curvature smaller than that of the profile of a ground contacting surface of the outboard tread part.

It is preferable that the absolute value of the camber angle is 2 to 4 degrees.

It is preferable that the tread portion has a tread pattern which is asymmetric with respect to the tire equator.

It is preferable that the first circumferential groove and the second circumferential groove are disposed on one side of the tire equator.

It is preferable that the widths of the circumferential grooves are in a range from 3% to 10% of a tread width.

It is preferable that the first and second circumferential grooves are the only circumferential grooves provided in the tread portion.

It is preferable that a land portion defined between the first circumferential groove and the second circumferential groove has a ground contacting surface whose profile is curved in an arc shape in a meridian cross-sectional view of the tire.

It is preferable that the width in the tire axial direction of the land portion is in a range from 15 to 60 mm.

According to another aspect of the present invention, a vehicle comprises the above-said tire mounted at a camber angle in a range from -4 to -2 degrees.

According to another aspect of the present invention, a method for designing the above-said tire comprises:
a calculation step of calculating a position in the tire axial direction of the cambered-tire tread center line; and
a groove arranging step of arranging the first circumferential groove and the second circumferential groove on both sides of the cambered-tire tread center line, respectively, wherein
the calculation step includes:
   a contact point calculation step of calculating a contact point between a tread profile line of the tread portion and a virtual straight line inclined with respect to the tire axial direction at an angle corresponding to the camber angle in a meridian cross-sectional view of the tire; and
   a cambered-tire tread center line calculation step of obtaining, as the cambered-tire tread center line, a line extending parallel to the tire circumferential direction passing through the contact point.

In the present invention, therefore, when the tire is mounted on a vehicle at the non-zero camber angle, since the first circumferential groove and the second circumferential groove are respectively located on both sides of the cambered-tire tread center line, the tire can exhibit excellent drainage performance.

### Brief description of the drawings

Fig. 1 is a schematic front view of a vehicle on which a tire according to the present invention is mounted at a non-zero camber angle.
Fig. 2 is a schematic cross-sectional view showing the tread portion of the tire shown in Fig. 1 in a tire meridian cross sectional view.
Fig. 3 is a diagram showing the shape of a ground contact patch of the tire shown in Fig. 1 which is inclined at the camber angle and loaded.
Fig. 4 is a flowchart showing the procedure of a tire design method according to the present invention.
Fig. 5 is a diagram for explaining a process of calculating a contact point according to the flowchart shown in Fig. 4.

### Description of the Preferred Embodiments

Embodiments of the present invention will now be described in detail in conjunction with accompanying drawings.

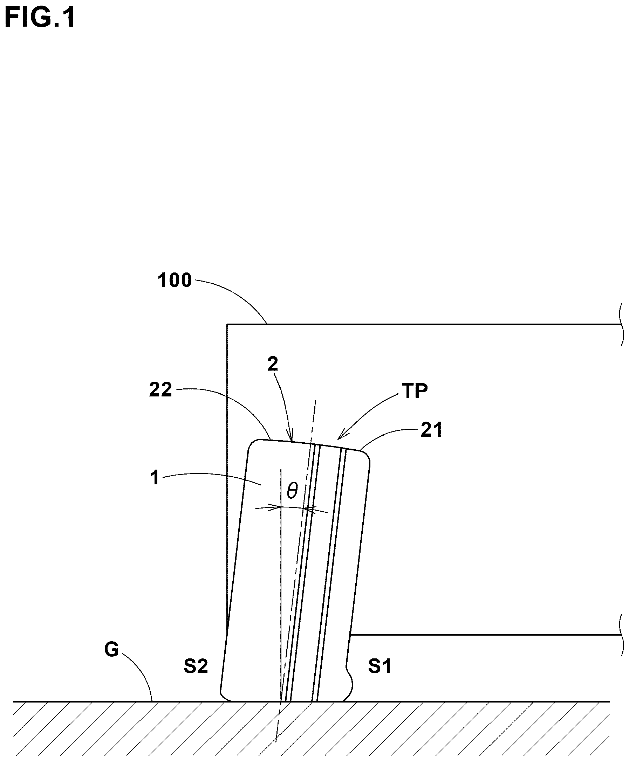

Fig. 1 shows a vehicle 100 on which a tire 1 as an embodiment of the present invention is mounted.

In the present embodiment, the tire 1 is designed to be suitably used with a vehicle 100 running on a circuit course.

According to the present invention, the tire 1 is mounted on the vehicle 100 so as to have a predetermined camber angle θ with respect to the ground.

The camber angle θ with respect to the ground which is preferable when running on a circuit course, is -4 to -2 degrees.

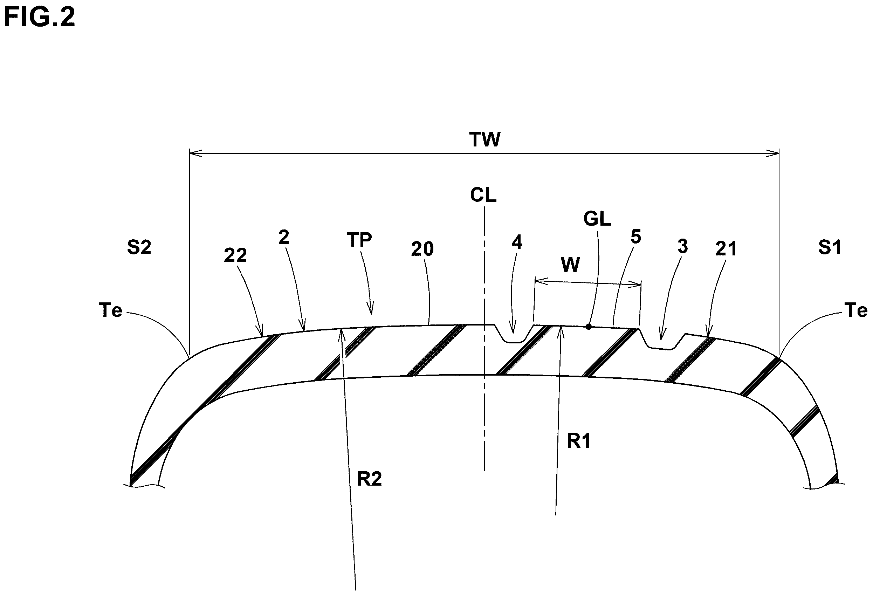

Fig. 2 is a tire meridian cross-sectional view showing the tread portion 2 of the tire 1.

The tread portion 2 is provided with a plurality of circumferential grooves extending continuously, circumferentially of the tire.

In the present embodiment, the plurality of circumferential grooves are first and second circumferential grooves 3 and 4.

By the circumferential grooves 3 and 4 and so forth, a tread pattern TP is formed in the tread 20 of the tread portion 2.

The groove widths of the circumferential grooves 3 and 4 are preferably set in a range from 3% to 10% of the tread width TW.

Here, The tread width TW is the distance in the tire axial direction between tread edges Te.

The tread edges Te are the axial outermost edges of the ground contacting patch of the tire which occurs when the tire in its normal state is placed on a flat horizontal surface at a camber angle of 0 degree and loaded with a normal load for the tire.

The normal state means an unloaded state in which the tire is mounted on a normal rim (not shown) and inflated to a normal pressure.

The normal rim is a wheel rim officially approved or recommended for the tire by standards organizations, i.e. JATMA (Japan and Asia), T&RA (North America), ETRTO (Europe), TRAA (Australia), STRO (Scandinavia), ALAPA (Latin America), ITTAC (India) and the like which are effective in the area where the tire is manufactured, sold or used.

The normal pressure and the normal load are the maximum air pressure and the maximum tire load for the tire specified by the same organization in the Air-pressure/Maximum-load Table or similar list.

For example, the normal rim is the "standard rim" specified in JATMA, the "Measuring Rim" in ETRTO, the "Design Rim" in TRA or the like. The normal pressure is the "maximum air pressure" in JATMA, the "Inflation Pressure" in ETRTO, the maximum pressure given in the "Tire Load Limits at various Cold Inflation Pressures" table in TRA or the like. The normal load is the "maximum load capacity" in JATMA, the "Load capacity" in ETRTO, the maximum value given in the above-mentioned table in TRA or the like.

However, if there is no applicable standard such as racing tires, then a wheel rim, tire inflation pressure and tire load which are recommended or specified by the tire manufacturer and the like, are used as the normal rim, normal pressure and normal load.

In this application including specification and claims, various dimensions, positions and the like of the tire refer to those under the normal state of the tire unless otherwise noted.

When the widths of the circumferential grooves 3 and 4 are 3% or more of the tread width TW, the drainage performance is enhanced, and lap time when running in wet conditions may be shortened.

When the widths of the circumferential grooves 3 and 4 are 10% or less of the tread width Tw, the rigidity in the tire axial direction of the tread portion 2 is increased, and when running on a dry road surface, the steering stability is improved, and lap time may be shortened.

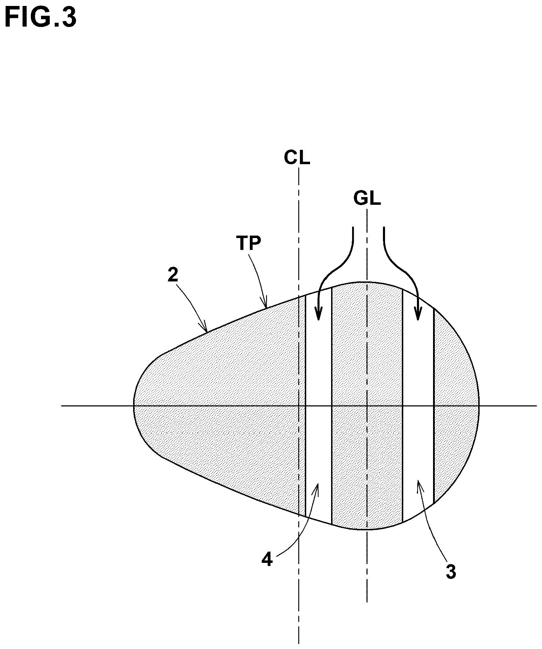

Fig. 3 schematically shows a shape of a ground contacting patch (footprint) of the tire 1 when the tire 1 mounted on the normal rim and inflated to the normal pressure, is contacted with a flat surface at a camber angle θ with respect to the flat surface, and loaded with the normal load in the direction perpendicular to the flat surface (hereinafter, such state is referred as the "cambered-tire loaded state").

In Fig. 3, the footprint of the tire 1 is indicated by shading with fine dot pattern.

The camber angle θ is a predetermined angle which is not zero.

when running on a circuit course, camber angles with respect to the ground which are often set, are in a range from -4 to -2 degrees as shown in Fig. 1. Thus, the absolute value of the camber angle θ is preferably 2 to 4 degrees.

In the cambered-tire loaded state, as shown in Fig. 3, a line, which extends parallel with the tire circumferential direction, and along which the length in the tire circumferential direction of the ground contacting patch becomes largest, is defined as "cambered-tire tread center line GL".

In the tire 1 in the present embodiment, the first circumferential groove 3 is disposed on one side (first side S1) in the tire axial direction of the cambered-tire tread center line GL, and the second circumferential groove 4 is disposed on the other side (second side s2) in the tire axial direction of the cambered-tire tread center line GL.

since the circumferential grooves are disposed on both sides of the cambered-tire tread center line GL, excellent drainage performance can be obtained in the state where the tire is mounted at the camber angle θ, especially when applying the brake on a wet road surface. Accordingly, the tire 1 in the present invention can exhibit excellent drainage performance when mounted on an actual vehicle at the camber angle.

It is preferable that the tread pattern TP is asymmetric with respect to the tire equator CL.

For example, in the tire 1 which is mounted on a vehicle at a relatively large camber angle θ, the first circumferential groove 3 and the second circumferential groove 4 are positioned on one side of the tire equator CL (the first side S1 in the tire axial direction).

Thereby, the drainage performance is enhanced on the above-said one side of the tire equator CL (first side S1), and lap time when running in wet conditions may be shortened.

On the other hand, the rigidity in the tire axial direction is increased on the other side of the tire equator CL (the second side s2 in the tire axial direction). Thereby, when running on a dry road surface, steering stability performance is improved, and lap time may be shortened.

It is preferable that the first circumferential groove 3 and the second circumferential groove 4 are arranged symmetrically with respect to the cambered-tire tread center line GL, so that when the tire is mounted on the vehicle, namely, under the cambered-tire loaded state, the first and second circumferential grooves 3 and 4 are arranged in a well-balanced manner. Thereby, the drainage performance is improved, and lap time when running in wet conditions may be shortened.

In the present embodiment, since the circumferential grooves 3 and 4 are disposed on both sides of the cambered-tire tread center line GL, even if circumferential grooves are only the two circumferential grooves 3 and 4, excellent drainage performance can be expected to shorten a lap time when running in wet road conditions.

Therefore, in order to provide higher axial rigidity for the tire 1 to improve steering stability performance on dry roads, and thereby to shorten a lap time when running in dry road conditions, it is preferred that the number of the circumferential grooves is only two.

As shown in Fig. 2, the tread portion 2 has a land region 5 divided by the first circumferential groove 3 and the second circumferential groove 4, therefore, the cambered-tire tread center line GL is positioned in the land region 5.

on the other hand, the vicinity of the cambered-tire tread center line GL is a region where the ground contact pressure becomes high in the cambered-tire loaded state.

Thus, by arranging the land region 5 at such high-ground contact pressure region, it becomes possible to generate a larger cornering force, which can improve the steering stability performance on dry roads and shorten the lap time.

It is preferable that, in the meridian cross-sectional view of the tire, the profile of the tread 20 is curved in an arc shape at least in the land region 5.

As a result, as shown in Fig. 3, in the ground contacting patch (footprint) of the tire, both edges on both sides in the tire circumferential direction (or front and rear edges) of the land region 5 become convex.

Therefore, when running on a wet road, water existing on the road surface is divided by the convex front edge of the land region 5 toward the both sides of the cambered-tire tread center line GL as indicated by arrows in Fig. 3, and smoothly guided into the grooves 3 and 4. As a result, the drainage by the circumferential grooves 3 and 4 is effectively improved to improve the wet performance, and a lap time when running in wet conditions may be shortened.

Preferably, the width W in the tire axial direction of the land region 5 is set in a range from 15 to 60 mm.

When the width W is 15 mm or more, in the vicinity of the cambered-tire tread center line GL, the rigidity in the tire axial direction of the tread portion 2 is increased, which improves the steering stability performance on dry roads, and the lap time when running in dry road conditions may be shortened.

When the width W is 60 mm or less, in the vicinity of the cambered-tire tread center line GL, the drainage performance is improved, and as a result, the lap time when running in wet road conditions may be shortened.

In the present embodiment, the mounting position of the tire 1 when the tire 1 is mounted on a vehicle 100 is specified, namely, which side of the tire is outboard or inboard of the vehicle is specified.

As shown in Fig. 1, in this example, the first side S1 is inboard and accordingly, the second side s2 is outboard of the vehicle. As a result, since the circumferential grooves 3 and 4 are located in an inner side of the tread 20 to which a large ground contacting pressure is applied when running straight, good drainage performance can be obtained during braking, which helps to shorten the lap time when running in wet road conditions.

On the other hand, the circumferential grooves 3 and 4 are not located in an outer side of the tread 20 to which a large ground contacting pressure is applied when cornering, therefore, the rigidity in the tire axial direction is maintained high, and the steering stability performance when running in dry road conditions can be improved, to shorten the lap time.

When the tire 1 is mounted on the vehicle 100 according to the above-mentioned intended mounting position, the tread portion 2 naturally has an inboard tread part 21 on one side of the tire equator CL (the first side S1 in the tire axial direction), and an outboard tread part 22 on the other side of the tire equator CL (the second side s2 in the tire axial direction).

It is desirable that, as shown in Fig. 2, in the meridian cross-sectional view of the tire, the profile of the tread 20 in the inboard tread part 21 has a radius of curvature R1, and the profile of the tread 20 in the outboard tread part 22 has a radius of curvature R2, and
the radius of curvature R1 is set to be smaller than the radius of curvature R2.
when running straight, since the inboard tread part 21 to which a large ground contacting pressure is applied, has the smaller radius of curvature R1, good drainage performance can be obtained, which helps to shorten the lap time when running in wet conditions.

Since the outboard tread part 22 to which a large contact pressure is applied during cornering, has the larger radius of curvature R2, the contact area of the outboard tread part 22 becomes increased, and the steering stability performance when running on a dry road surface is improved, which helps to shorten the lap time.

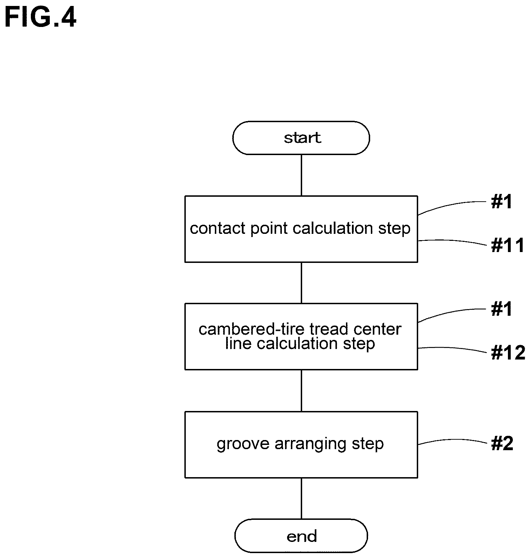

Fig. 4 is a flowchart showing a method for designing the tire 1 in the present embodiment. The tire design method comprises a calculation step #1 and a groove arranging step #2.

In the calculation step #1, the position in the tire axial direction of the cambered-tire tread center line GL is calculated. For the calculation of the position of the cambered-tire tread center line GL, used in this example is a computer device comprising a CPU (central Processing unit), and a memory for storing a program controlling the operation of the CPU, various information, and the like,

Further, the calculation step #1 includes
a contact point calculation step #11 and
a cambered-tire tread center line calculation step #12.

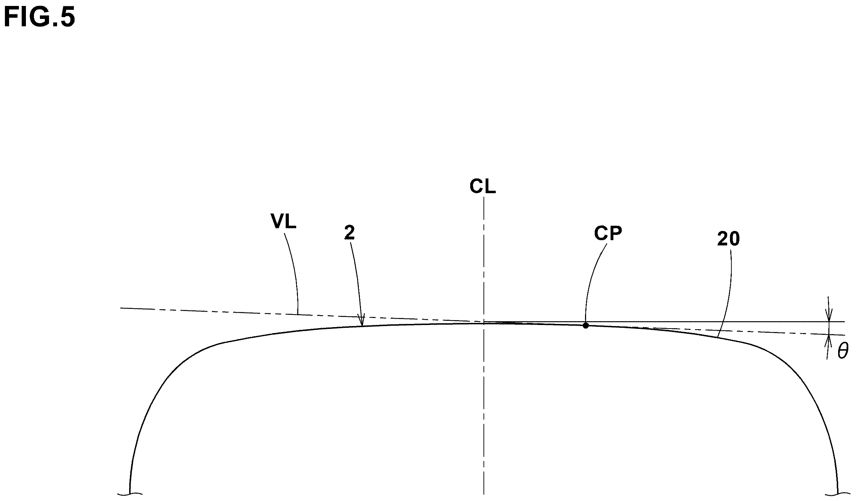

Fig. 5 shows the contact point calculation step #11, wherein a contact point CP between a virtual line VL and the profile line of the tread 20 is calculated.

The virtual line VL is a straight line inclined at an angle with respect to the tire axial direction in the meridian cross-sectional view of the tire. The angle is equal to the camber angle θ when the tire is mounted on a vehicle according to the wheel alignment of the vehicle.

In the contact point calculation step #11, the virtual line VL is moved in the tire radial direction, and the contact point CP between the virtual line VL and the profile of the tread 20 is calculated.

The contact point CP is regarded as the center in the tire axial direction of the ground contacting patch of the tire 1 which is inclined at the camber angle θ.

In the cambered-tire tread center line calculation step #12, a circumferential line passing through the contact point CP and extending parallel to the tire circumferential direction is calculated. Such circumferential line is regarded as the cambered-tire tread center line GL. Therefore, the cambered-tire tread center line GL can be obtained by
calculating the distance from the tire equatorial line CL to the contact point CP, and drawing a parallel line at the above distance in the tire axial direction from the tire equatorial line CL.

In this tire design method, the parallel line is regarded as the cambered-tire tread center line GL, the cambered-tire tread center line GL can be obtained by a simple calculation.

In the groove arranging step #2, the first circumferential groove 3 and the second circumferential groove 4 are arranged on both sides of the cambered-tire tread center line GL, respectively.

The distance between the first circumferential groove 3 and the second circumferential groove 4 is determined according to a desired axial width w of the land region 5.

Further, other grooves (for example, lateral grooves extending in the tire axial direction) are arranged as needed.

According to this tire design method, the cambered-tire tread center line GL can be obtained by a simple calculation, and the first circumferential groove 3 and the second circumferential groove 4 are arranged based on the cambered-tire tread center line GL. Therefore, the tread pattern TP can be designed by the simple method.

While detailed description has been made of preferable embodiments of the present invention, the present invention can be embodied in various forms without being limited to the illustrated embodiments.

For example, the tread portion 2 may be provided with lateral grooves extending in the tire axial direction in addition to the first circumferential groove 3 and the second circumferential groove 4.

Further, a circumferential groove whose width is less than 3% of the tread width TW may be provided.

The present invention is suitably applied to a pneumatic tire to be mounted on a vehicle at a relatively large camber angle θ such as racing car and sports car running on a circuit at high speed. But, the present invention can be applied to various tires to be mounted on vehicles at non-zero camber angles.

### Comparison tests

Based on the tread portion shown in Figs. 2 and 3, pneumatic tires of size 205/55R16 (rim size 16x7.0J) were experimentally manufactured.

The test tires had the same structure except for the specifications shown in Table 1.

The test tires were mounted on four wheels of a test car (2000 cc front-engine, rear-drive sports car) at a negative camber angle of 3 degrees and inflated to 220 kPa.

Then, the tires were tested for wet performance and dry performance as follows.

### < wet performance test >

In a tire test course, the test car was run on an asphalt road surface covered with 2 mm depth water, and the braking G at the time of applying a full brake was measured.

The results are indicated in Table 1 by an index based on working Example 1 being 100, wherein the larger the value, the better the wet performance.

### < Dry performance test >

In a test course, the test car was run on a dry asphalt road surface, and the steering stability performance was evaluated by the test driver.

The results are indicated in Table 1 by an index based on working Example 1 being 100, wherein the larger the value, the better the dry performance.

Incidentally, the overall performance of each test tire can be evaluated by the sum of the wet performance index and the dry performance index.

**Table 1**

| tire | comparative example 1 | comparative example 2 | working example 1 |
|---|---|---|---|
| circumferential grooves' depth (mm) | 6 | 6 | 6 |
| circumferential grooves' width (mm) | 10 | 10 | 10 |
| number of circumferential grooves | 2 | 2 | 2 |
| 1st circum. groove position | 1st side | 2nd side | 1st side |
| 2nd circum. groove position | 1st side | 2nd side | 2nd side |
| wet performance | 85 | 90 | 100 |
| dry performance | 100 | 90 | 100 |

As is clear from Table 1, it was confirmed that the working example tire had well-balanced and significantly improved wet performance and dry performance as compared with the comparative examples.

Based on the tread portion shown in Figs. 2 and 3, pneumatic tires of the above-described size having the specifications shown in Table 2 were experimentally manufactured, and tested for the wet performance and dry performance in the same manner as described above.

### < wet performance test >

The results are indicated in Table 2 by an index based on working Example 2 being 100, wherein the larger the value, the better the wet performance.

### < Dry performance test >

The results are indicated in Table 2 by an index based on working Example 2 being 100, wherein the larger the value, the better the dry performance.

**Table 2**

| tire | | working example 2 | working example 3 | working example 4 |
|---|---|---|---|---|
| circumferential grooves' depth (mm) | | 6 | 6 | 6 |
| circumferential grooves' width (mm) | | 10 | 10 | 10 |
| number of circumferential grooves | | 2 | 2 | 2 |
| 1st circum. groove position | | 1st side | 1st side | 1st side |
| | distance from cambered-tire tread center line (mm) | 15 | 20 | 25 |
| 2nd circum. groove position | | 2nd side | 2nd side | 2nd side |
| | distance from cambered-tire tread center line (mm) | 25 | 20 | 15 |
| wet performance | | 100 | 110 | 100 |
| dry performance | | 100 | 110 | 100 |

Based on the tread portion shown in Figs. 2 and 3, pneumatic tires of the above-described size having the specifications shown in Table 3 were experimentally manufactured, and tested for the wet performance and dry performance in the same manner as described above.

### < wet performance test >

The results are indicated in Table 3 by an index based on working Example 5 being 100, wherein the larger the value, the better the wet performance.

### < Dry performance test >

The results are indicated in Table 3 by an index based on working Example 5 being 100, wherein the larger the value, the better the dry performance.

**Table 3**

| tire | working example 5 | working example 6 |
|---|---|---|
| circumferential grooves' depth (mm) | 6 | 6 |
| circumferential grooves' width (mm) | 10 | 10 |
| number of circumferential grooves | 2 | 3 |
| 1st circum. groove position | 1st side | 1st side |
| 2nd circum. groove position | 2nd side | 2nd side |
| 3rd circum. groove position | --- | 2nd side |
| wet performance | 100 | 105 |
| dry performance | 100 | 90 |

Based on the tread portion shown in Figs. 2 and 3, pneumatic tires of the above-described size having the specifications shown in Table 4 were experimentally manufactured, and tested for the wet performance and dry performance in the same manner as designed above.

### < wet performance test >

The results are indicated in Table 4 by an index based on working Example 7 being 100, wherein the larger the value, the better the wet performance.

### < Dry performance test >

The results are indicated in Table 4 by an index based on working Example 7 being 100, wherein the larger the value, the better the dry performance.

**Table 4**

| tire | working example 7 | working example 8 |
|---|---|---|
| circumferential grooves' depth (mm) | 6 | 6 |
| circumferential grooves' width (mm) | 10 | 10 |
| number of circumferential grooves | 2 | 2 |
| 1st circum. groove position | 1st side | 1st side |
| 2nd circum. groove position | 2nd side | 2nd side |
| land portion profile | straight | arc |
| wet performance | 100 | 110 |
| dry performance | 100 | 100 |

Based on the tread portion shown in Figs. 2 and 3, pneumatic tires of the above-described size having the specifications shown in Table 5 were experimentally manufactured, and tested for the wet performance and dry performance in the same manner as designed above.

### < wet performance test >

The results are indicated in Table 5 by an index based on working Example 11 being 100, wherein the larger the value, the better the wet performance.

### < Dry performance test >

The results are indicated in Table 5 by an index based on working Example 11 being 100, wherein the larger the value, the better the dry performance.

**Table 5**

| tire | working example 9 | working example 10 | working example 11 | working example 12 | working example 13 |
|---|---|---|---|---|---|
| circumferential grooves' depth (mm) | 6 | 6 | 6 | 6 | 6 |
| circumferential grooves' width (mm) | 10 | 10 | 10 | 10 | 10 |
| number of circumferential grooves | 2 | 2 | 2 | 2 | 2 |
| 1st circum. groove position | 1st side | 1st side | 1st side | 1st side | 1st side |
| 2nd circum. groove position | 2nd side | 2nd side | 2nd side | 2nd side | 2nd side |
| width W (mm) | 10 | 15 | 40 | 60 | 70 |
| wet performance | 110 | 105 | 100 | 95 | 90 |
| dry performance | 90 | 95 | 100 | 105 | 110 |

Based on the tread portion shown in Figs. 2 and 3, pneumatic tires of the above-described size having the specifications shown in Table 6 were experimentally manufactured, and tested for the wet performance and dry performance in the same manner as designed above.

### < wet performance test >

The results are indicated in Table 6 by an index based on working Example 14 being 100, wherein the larger the value, the better the wet performance.

### < Dry performance test >

The results are indicated in Table 6 by an index based on working Example 14 being 100, wherein the larger the value, the better the dry performance.

**Table 6**

| tire | working example 14 | working example 15 | working example 16 |
|---|---|---|---|
| circumferential grooves' depth (mm) | 6 | 6 | 6 |
| circumferential grooves' width (mm) | 10 | 10 | 10 |
| number of circumferential grooves | 2 | 2 | 2 |
| 1st circum. groove position | 1st side | 1st side | 1st side |
| 2nd circum. groove position | 2nd side | 2nd side | 2nd side |
| tread radius of curvature | R1>R2 | R1=R2 | R1<R2 |
| wet performance | 100 | 110 | 120 |
| dry performance | 100 | 110 | 120 |

### Description of the reference signs

1 tire
2 tread portion
3 circumferential groove
3 first circumferential groove
4 second circumferential groove
5 land region
20 tread
21 inboard tread part
22 outboard tread part
100 vehicle
CL tire equator
CP contact point
GL cambered-tire tread center line
R1 radius of curvature
R2 radius of curvature
S1 first side
s2 second side
TP tread pattern
TW tread width
VL virtual line
θ camber angle

## Claims

1. A tire (1) comprising a tread portion (2) provided with circumferentially continuously extending circumferential grooves including a first circumferential groove (3) and a second circumferential groove (4),
wherein
the first circumferential groove (3) and the second circumferential groove (4) are disposed on one side and the other side, respectively, of a cambered-tire tread center line (GL),
the cambered-tire tread center line (GL) is defined by a line extending in the tire circumferential direction, along which a length in the tire circumferential direction of the ground contacting patch of the tire becomes maximum when the tire which is mounted on a normal rim and inflated to a normal pressure, is placed on a flat horizontal surface at a non-zero camber angle (θ) with respect to the flat horizontal surface, and loaded with a normal tire load in the vertical direction,
**characterized in that**
the first circumferential groove (3) and the second circumferential groove (4) are arranged symmetrically with respect to the cambered-tire tread center line (GL),
and/or **in that**
the tread portion (2) comprises an inboard tread part (21) and an outboard tread part (22) to be positioned inside and outside, respectively, with respect to a vehicle when the tire (1) is mounted on the vehicle, and
in a meridian cross-sectional view of the tire (1), the profile of a ground contacting surface of the inboard tread part (21) has a radius of curvature (R1) smaller than that (R2) of the profile of a ground contacting surface of the outboard tread part (22).

2. The tire (1) according to claim 1, wherein
the absolute value of the camber angle (θ) is 2 to 4 degrees.

3. The tire (1) according to claim 1 or 2, wherein
the tread portion (2) has a tread pattern (TP) which is asymmetric with respect to the tire equator (CL).

4. The tire (1) according to claim 1, 2 or 3, wherein
the first circumferential groove (3) and the second circumferential groove (4) are disposed on one side of the tire equator (CL).

5. The tire (1) according to any one of claims 1 to 4, wherein
the widths of the circumferential grooves (3, 4) are in a range from 3% to 10% of a tread width (TW).

6. The tire (1) according to any one of claims 1 to 5, wherein
the first and second circumferential grooves (3, 4) are the only circumferential grooves provided in the tread portion (2).

7. The tire (1) according to any one of claims 1 to 6, wherein
a land portion (5) defined between the first circumferential groove (3) and the second circumferential groove (4) has a ground contacting surface whose profile is curved in an arc shape in a meridian cross-sectional view of the tire (1).

8. The (1) tire according to claim 7, wherein
the width (W) in the tire axial direction of the land portion (5) is in a range from 15 to 60 mm.

9. A vehicle comprising the tire (1) according to any one of claims 1 to 8 which is mounted at a camber angle (θ) in a range from -4 to -2 degrees.

10. A method for designing the tire (1) according to any one of claims 1 to 8, comprising:
a calculation step (#1) of calculating a position in the tire axial direction of the cambered-tire tread center line (GL); and
a groove arranging step (#2) of arranging the first circumferential groove (3) and the second circumferential groove (4) on both sides of the cambered-tire tread center line (GL), respectively,
**characterized in that**
the calculation step (#1) includes:
a contact point calculation step (#11) of calculating a contact point (CP) between a tread profile line of the tread portion (2) and a virtual straight line inclined with respect to the tire axial direction at an angle corresponding to the camber angle (θ) in a meridian cross-sectional view of the tire (1); and
a cambered-tire tread center line calculation step (#12) of obtaining, as the cambered-tire tread center line (GL), a line extending parallel to the tire circumferential direction passing through the contact point (CP).

## Patentansprüche

1. Reifen (1), der einen Laufflächenabschnitt (2) umfasst, welcher mit sich in Umfangsrichtung kontinuierlich erstreckenden Umfangsrillen versehen ist, die eine erste Umfangsrille (3) und eine zweite Umfangsrille (4) umfassen, wobei
die erste Umfangsrille (3) und die zweite Umfangsrille (4) auf einer Seite bzw. auf der anderen Seite einer Laufflächen-Mittelachse (GL) für Reifen mit Radsturz angeordnet sind,
die Laufflächen-Mittelachse (GL) für Reifen mit Radsturz durch eine Linie definiert ist, die sich in der Reifenumfangsrichtung erstreckt und entlang derer eine Länge der Bodenkontaktstelle des Reifens in der Reifenumfangsrichtung maximal wird, wenn der Reifen, der an einer Normalfelge montiert und bis zu einem Normaldruck aufgepumpt ist, auf einer flachen horizontalen Fläche unter einem Sturzwinkel (θ) ungleich Null bezogen auf die flache horizontale Fläche angeordnet und mit einer Normalreifenlast in der vertikalen Richtung belastet ist,
**dadurch gekennzeichnet, dass**
die erste Umfangsrille (3) und die zweite Umfangsrille (4) bezogen auf die Laufflächen-Mittelachse (GL) für Reifen mit Radsturz symmetrisch angeordnet sind
und/oder dass
der Laufflächenabschnitt (2) einen inneren Laufflächenteil (21) und einen äußeren Laufflächenteil (22) umfasst, die bezogen auf ein Fahrzeug innen bzw. außen zu positionieren sind, wenn der Reifen (1) an dem Fahrzeug montiert wird, und
in einer Meridian-Querschnittsansicht des Reifens (1) das Profil einer Bodenkontaktfläche des inneren Laufflächenteils (21) einen Krümmungsradius (R1) aufweist, der kleiner als derjenige (R2) des Profils einer Bodenkontaktfläche des äußeren Laufflächenteils (22) ist.

2. Reifen (1) nach Anspruch 1, wobei
der absolute Wert des Sturzwinkels (θ) 2 bis 4 Grad beträgt.

3. Reifen (1) nach Anspruch 1 oder 2, wobei
der Laufflächenabschnitt (2) ein Laufflächenmuster (TP) aufweist, das bezogen auf den Reifenäquator (CL) asymmetrisch ist.

4. Reifen (1) nach Anspruch 1, 2 oder 3, wobei
die erste Umfangsrille (3) und die zweite Umfangsrille (4) auf einer Seite des Reifenäquators (CL) angeordnet sind.

5. Reifen (1) nach einem der Ansprüche 1 bis 4, wobei
die Breiten der Umfangsrillen (3, 4) in einem Bereich von 3% bis 10% einer Laufflächenbreite (TW) liegen.

6. Reifen (1) nach einem der Ansprüche 1 bis 5, wobei
die erste und die zweite Umfangsrille (3, 4) die einzigen Umfangsrillen sind, die in dem Laufflächenabschnitt (2) vorgesehen sind.

7. Reifen (1) nach einem der Ansprüche 1 bis 6, wobei
ein Landabschnitt (5), der zwischen der ersten Umfangsrille (3) und der zweiten Umfangsrille (4) definiert ist, eine Bodenkontaktfläche aufweist, deren Profil in einer Meridian-Querschnittsansicht des Reifens (1) in einer Bogenform gekrümmt ist.

8. Reifen (1) nach Anspruch 7, wobei
die Breite (W) des Landabschnitts (5) in der Reifenaxialrichtung in einem Bereich von 15 bis 60 mm liegt.

9. Fahrzeug, das den Reifen (1) nach einem der Ansprüche 1 bis 8 umfasst, welcher unter einem Sturzwinkel (θ) in einem Bereich von -4 bis -2 Grad montiert ist.

10. Verfahren zum Konstruieren des Reifens (1) nach einem der Ansprüche 1 bis 8, umfassend:
einen Berechnungsschritt (#1) zum Berechnen einer Position der Laufflächen-Mittelachse (GL) für Reifen mit Radsturz in der Reifenaxialrichtung; und
einen Rillenanordnungsschritt (#2) zum Anordnen der ersten Umfangsrille (3) bzw. der zweiten Umfangsrille (4) auf beiden Seiten der Laufflächen-Mittelachse (GL) für Reifen mit Radsturz,
**dadurch gekennzeichnet, dass**
der Berechnungsschritt (#1) umfasst:
einen Kontaktpunkt-Berechnungsschritt (#11) zum Berechnen eines Kontaktpunkts (CP) zwischen einer Laufflächen-Profillinie des Laufflächenabschnitts (2) und einer virtuellen geraden Linie, die bezogen auf die Reifenaxialrichtung um einen Winkel, der dem Sturzwinkel (θ) entspricht, in einer Meridian-Querschnittsansicht des Reifens (1) geneigt ist; und
einen Berechnungsschritt (#12) für die Laufflächen-Mittelachse für Reifen mit Radsturz zum Erhalten einer Linie, die sich parallel zu der Reifenumfangsrichtung erstreckt und durch den Kontaktpunkt (CP) verläuft, als die Laufflächen-Mittelachse (GL) für Reifen mit Radsturz.

## Revendications

1. Pneumatique (1) comprenant une portion formant bande de roulement (2) dotée de rainures circonférentielles s'entendant circonférentiellement en continu incluant une première rainure circonférentielle (3) et une seconde rainure circonférentielle (4),
dans lequel
la première rainure circonférentielle (3) et la seconde rainure circonférentielle (4) sont disposées sur un côté et l'autre côté, respectivement, d'une ligne centrale de bande de roulement de pneumatique à cambrure (GL),
la ligne centrale de bande de roulement de pneumatique à cambrure (GL) est définie par une ligne s'étendant dans la direction circonférentielle du pneumatique, le long de laquelle une longueur dans la direction circonférentielle du pneumatique du patch de contact au sol du pneumatique devient maximum quand le pneumatique, qui est monté sur une jante normale et est gonflé à une pression normale, est placé sur une surface horizontale plane sous un angle de cambrure (θ) qui n'est pas égal à zéro par rapport à la surface horizontale plane, et est chargé avec une charge pneumatique normale dans la direction verticale,
**caractérisé en ce que**
la première rainure circonférentielle (3) et la seconde rainure circonférentielle (4) sont agencées de manière symétrique par rapport à la ligne centrale de bande de roulement de pneumatique à cambrure (GL),
et/ou **en ce que**
la portion formant bande de roulement (2) comprend une partie de bande de roulement intérieure (21) et une partie de bande de roulement extérieure (22) devant être positionnées à l'intérieur et à l'extérieur, respectivement, par rapport à un véhicule quand le pneumatique (1) est monté sur le véhicule, et dans une vue en section transversale méridienne du pneumatique (1), le profil d'une surface de contact au sol de la partie de bande de roulement intérieure (21) a un rayon de courbure (R1) plus petit que celui (R2) du profil d'une surface de contact au sol de la partie de bande de roulement extérieure (22).

2. Pneumatique (1) selon la revendication 1, dans lequel la valeur absolue de l'angle de cambrure (θ) est de 2 à 4 degrés.

3. Pneumatique (1) selon la revendication 1 ou 2, dans laquelle la portion formant bande de roulement (2) a un motif de bande de roulement (TP) qui est asymétrique par rapport à l'équateur de pneumatique (CL).

4. Pneumatique (1) selon la revendication 1, 2 ou 3, dans lequel la première rainure circonférentielle (3) et la seconde rainure circonférentielle (4) sont disposées sur un côté de l'équateur de pneumatique (CL).

5. Pneumatique (1) selon l'une quelconque des revendications 1 à 4, dans lequel
les largeurs des rainures circonférentielles (3, 4) sont dans une plage allant de 3 % à 10 % d'une largeur de bande de roulement (TW).

6. Pneumatique (1) selon l'une quelconque des revendications 1 à 5, dans lequel
la première et la seconde rainure circonférentielle (3, 4) sont les seules rainures circonférentielles prévues dans la portion formant bande de roulement (2).

7. Pneumatique (1) selon l'une quelconque des revendications 1 à 6, dans lequel
une portion en relief (5) définie entre la première rainure circonférentielle (3) et la seconde rainure circonférentielle (4) a une surface de contact au sol dont le profil est incurvé en forme d'arc dans une vue en section transversale méridienne du pneumatique (1).

8. Pneumatique (1) selon la revendication 7, dans lequel
la largeur (W) dans la direction axiale du pneumatique de la portion en relief (5) est dans une plage allant de 15 à 60 mm.

9. Véhicule comprenant le pneumatique (1) selon l'une quelconque des revendications 1 à 8 qui est monté sous un angle de cambrure (θ) dans une plage allant de -4 à -2 degrés.

10. Procédé de conception du pneumatique (1) selon l'une quelconque des revendications 1 à 8, comprenant :
une étape de calcul (#1) consistant à calculer une position dans la direction axiale du pneumatique de la ligne centrale de bande de roulement de pneumatique à cambrure (GL) ; et
une étape d'agencement de rainures (#2) consistant à agencer la première rainure circonférentielle (3) et la seconde rainure circonférentielle (4) sur les deux côtés de la ligne centrale de bande de roulement de pneumatique à cambrure (GL), respectivement,
**caractérisé en ce que**
l'état de calcul (#1) inclut :
une étape de calcul de point de contact (#11) consistant à calculer un point de contact (CP) entre une ligne de profil de bande de roulement de la portion formant bande de roulement (2) et une ligne droite virtuelle inclinée par rapport à la direction axiale du pneumatique sous un angle correspondant à l'angle de cambrure (θ) dans une vue en section transversale méridienne du pneumatique (1) ; et
une étape de calcul de ligne centrale de bande de roulement de pneumatique à cambrure (#12) consistant à obtenir, à titre de ligne centrale de bande de roulement de pneumatique à cambrure (GL), une ligne s'étendant parallèlement à la direction circonférentielle du pneumatique passant à travers le point de contact (CP).
